# EUROPÄISCHE PATENTSCHRIFT

(11) **EP 2 831 451 B1**
(45) Veröffentlichungstag und Bekanntmachung des Hinweises auf die Patenterteilung: **27.12.2017**
(21) Anmeldenummer: 13711883.2
(22) Anmeldetag: 22.03.2013
(51) Int. Cl.: F16D 55/226, F16D 65/56

(54) **ZUSPANNVORRICHTUNG FÜR EINE DREHHEBELBETÄTIGTE SCHEIBENBREMSE**
BRAKE APPLICATION DEVICE FOR A DISK BRAKE ACTUATED BY A ROTARY LEVER
DISPOSITIF D'APPLICATION D'EFFORT POUR UN FREIN À DISQUE ACTIONNÉ PAR UN LEVIER ROTATIF

(30) Priorität: 26.03.2012 DE 102012006113
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); FRICKE, Jens, 94474 Vilshofen (DE); IRASCHKO, Johann, 85301 Schweitenkirchen (DE); PESCHEL, Michael, 82296 Schöngeising (DE); STOEGER, Christian, 94474 Vilshofen (DE)
(86) Internationale Anmeldenummer: PCT/EP2013/056006
(87) Internationale Veröffentlichungsnummer: WO 2013/143979

(56) Entgegenhaltungen:
- EP-A1- 0 555 682
- EP-A1- 0 614 025
- WO-A1-2010/121754
- DE-A1- 4 323 292
- US-A- 5 582 273
- US-A- 5 722 516

## Beschreibung

Die Erfindung betrifft eine Zuspannvorrichtung für eine drehhebelbetätigte Scheibenbremse, insbesondere für eine mittels einer Kolbenstange eines pneumatisch oder elektromotorisch betriebenen Bremszylinders betätigbare Scheibenbremse, wie z.B. aus EP-A-0 614 025 bekannt. Pneumatisch betätigte Scheibenbremse weisen in der Regel einen als Schiebesattel, Schwenksattel oder Festsattel ausgebildeten Bremssattel auf, in welchem eine Zuspannvorrichtung angeordnet ist, welche dazu dient, Bremsbeläge beidseits einer Bremsscheibe und die Bremsscheibe miteinander in Wirkverbindung zu bringen, um durch Reibung eine Bremswirkung zu erzielen.
In der WO 91/19115 weist die Zuspannvorrichtung einen Drehhebel auf, der an seinem unteren Ende wenigstens einen Exzenteransatz aufweist, der über ein erstes Schwenklager drehbar in Inneren des Bremssattels gelagert ist und der über eine Stützwalze an einer Traverse abgestützt ist, in welche die Nachstellspindeln eingeschraubt sind, die über Druckstücke auf den aktionsseitigen Bremsbelag einwirken können, um diesen bei Bremsungen in Richtung der Bremsscheibe zu verschieben. Diese bekannte pneumatisch betätigte Scheibenbremse weist zudem eine automatische Nachstellvorrichtung auf, um den Belag- und Scheibenverschleiß auszugleichen.
Nach der WO 91/19115 wirkt die Nachstellvorrichtung drehend entweder auf die Mutter (die in dieser Schrift als die Traverse ausgebildet ist) oder die Spindel einer Mutter-/Spindelanordnung, um durch eine Relativverschraubung zwischen Mutter und Schaube die Länge der Mutter-/Spindelanordnung zu verändern, wodurch die Gesamtlänge der Zuspannvorrichtung zwischen dem Bremsbelag und dem Widerlager der Zuspannvorrichtung am Inneren des Bremssattels vergrößert wird, wodurch wiederum der zunehmende Belagverschleiß ausgeglichen wird.

Die automatische Nachstellvorrichtung wird mittelbar oder unmittelbar von einem Spreiz- oder Betätigungsmechanismus angetrieben. So ist es aus dem genannten Stand der Technik bekannt, den Drehhebel der Zuspannvorrichtung über einen Antriebsstift mit einem Getriebeelement der Nachstellvorrichtung zu koppeln, so dass bei einem Zuspannen der Bremse, bei welchem der Drehhebel verschwenkt wird, auch das Getriebeelement der Nachstellvorrichtung bewegt, insbesondere gedreht wird. Diese Drehung wird über weitere Getriebeelemente der Nachstellvorrichtung auf ein Abtriebsgetriebeelement übertragen, welches drehfest mit der Mutter oder der Spindel der Mutter-/Spindelanordnung gekoppelt ist. Nachteilig ist insbesondere, dass der Antriebstift nur schwer mit genügender Präzision an dem Drehhebel ausgebildet werden kann. Auch ist ein Nachkalibrieren des Stiftes schwierig und aufwendig.

In der WO 91/19115 sind zwei drehfest gekoppelte Mutter-Spindelanordnungen vorgesehen, die über ein Synchronisationsgetriebe - ein Umschlingungsgetriebe wie eine Kette oder einen Zahnriemen - drehfest gekoppelt sind, wobei nur in einer dieser Anordnungen eine Nachstellvorrichtung bzw. ein Nachstellantrieb angeordnet ist. Das Umschlingungsgetriebe umgreift den Koppelbereich zwischen dem Exzenteransatz des Drehhebels und der Traverse.

Die US RE38,874E zeigt darüber hinaus die auch in Fig. 10 dieser Anmeldung abgebildete Schiebesattel-Scheibenbremse, bei welcher die Anordnung von Drehhebel und Stützwalze im Vergleich zum eingangs genannten Stand der Technik "umgedreht" worden ist, d.h., die Stützwalze oder eine stützwalzenartige Kontur ist drehfest an der Innenseite des Bremssattels angeordnet oder ausgebildet und auf der Stützwalze ist der untere Exzenteransatz des Drehhebels drehbar gelagert, welcher an seiner von der Stützwalze angewandten Seite über ein Schwenklager auf eine Traverse einwirkt, in welche die beiden über das Synchronisationsgetriebe - hier eine Kegelradanordnung - gekoppelten Stellspindeln mit den Druckstücken eingeschraubt sind.

Die vorstehend beschriebenen Zuspannvorrichtungen der gattungsgemäßen Scheibenbremse des Standes der Technik haben sich an sich bewährt, sollen aber hinsichtlich ihres konstruktiven Aufbaus und ihres Betriebsverhaltens weiter optimiert werden.
Die Lösung dieser Aufgabe ist das Ziel der Erfindung.
Die Erfindung löst diese Aufgabe durch den Gegenstand des Anspruchs 1.
Nach diesem Anspruch wird insbesondere die Kopplung zwischen dem Drehhebel und der Nachstellvorrichtung auf einfache Weise deutlich verbessert, da sie durch ein separates, präzise herstellbares und dennoch kostengünstiges Bauelement wie ein Antriebsblech übernommen wird, dass an dem Drehhebel angeordnet, insbesondere befestigt wird.

Die Erfindung schafft auch die vorteilhafte Scheibenbremse nach Anspruch 7. Vorteilhafte Ausgestaltungen der Erfindung sind den Unteransprüchen zu entnehmen.
Nachfolgend wird die Erfindung anhand von Ausführungsbeispielen unter Bezug auf die Zeichnung näher beschrieben. Es zeigt:
- Fig. 1: einen Schnitt durch einen Bereich eines Bremssattels und einer Zuspannvorrichtung einer erfindungsgemäßen Scheibenbremse;
- Fig. 2: eine Sprengansicht von Elementen der Zuspannvorrichtung aus Fig. 1;
- Fig. 3a: eine perspektivische Ansicht einer Baugruppe der Zuspannvorrichtung aus Fig. 1 und 2;
- Fig. 3b: eine perspektivische Ansicht einer Druckstempelanordnung der Zuspannvorrichtung aus Fig. 1;
- Fig. 4: einen Schnitt durch eine Variante einer Hebelbaugruppe für eine Zuspannvorrichtung ähnlich zur Fig. 1;
- Fig. 5: eine perspektivische Ansicht eines Lagerbockes aus Fig. 4;
- Fig. 6: verschiedene Ansichten der Lagerböcke der Zuspannvorrichtung aus Fig. 1;
- Fig. 7: eine perspektivische Ansicht eines Synchronisationsgetriebes der Zuspannvorrichtung aus Fig. 1;
- Fig. 8: eine Ansicht des an einer Traverse mit einer Nachstellvorrichtung und Druckstempeln angeordneten Synchronisationsgetriebes;
- Fig. 9: eine weitere perspektivische Ansicht eines Teils der Zuspannvorrichtung aus Fig. 1;
- Fig. 10a: eine perspektivische Ansicht einer Drehhebelbaugruppe der Zuspannvorrichtung aus Fig. 9;
- Fig. 10b: eine perspektivische Ansicht eines Antriebsblechs für den Drehhebel aus Fig. 10a; und
- Fig. 11a: eine Schnittansicht einer zweiten Hebelbaugruppe für eine Zuspannvorrichtung;
- Fig. 11b: eine Ausschnittsvergrößerung aus Fig. 11a; und

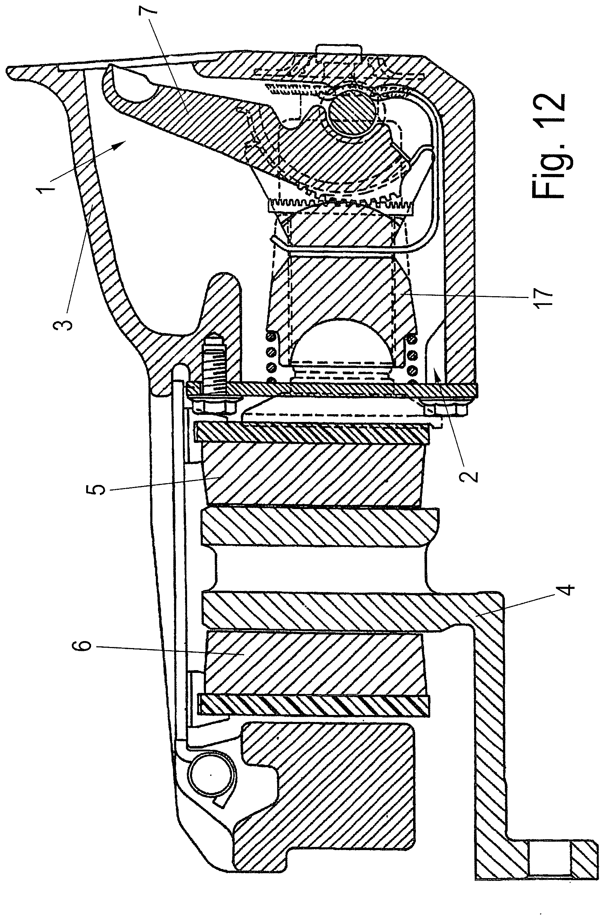

- Fig. 12: einen Schnitt durch eine bekannte Scheibenbremse.

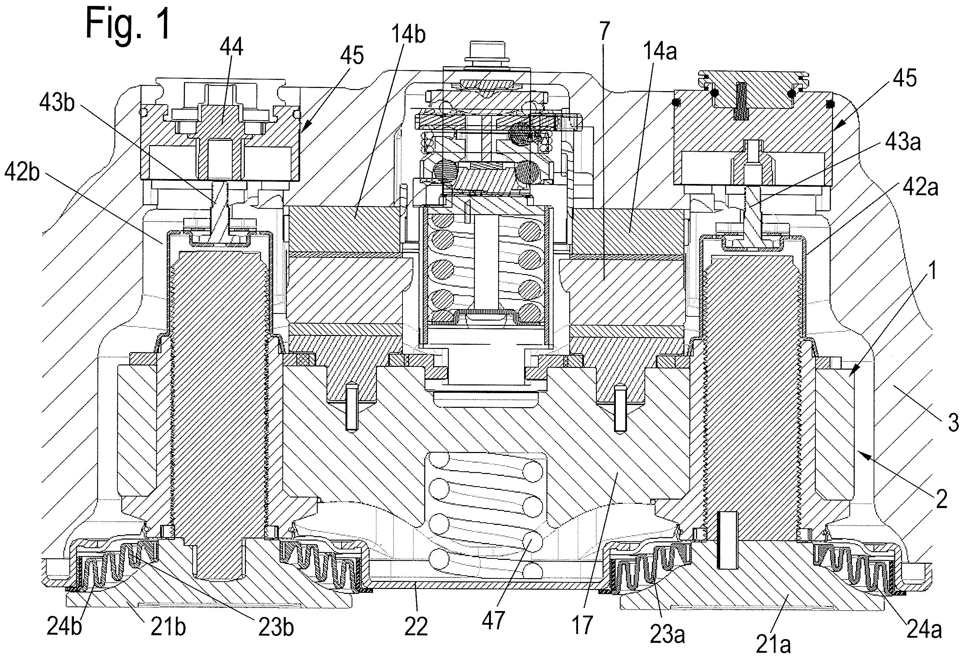

Fig. 1 zeigt einen Schnitt durch einen Abschnitt einer eine Zuspannvorrichtung 1 aufnehmenden Öffnung 2 eines Bremssattels 3 einer von einem (hier nicht dargestellten) Aktuatorelement betätigbaren Scheibenbremse. Bei dem Aktuatorelement handelt es sich vorzugsweise um eine Kolbenstange eines pneumatisch oder elektromotorisch oder federbetätigten Bremszylinders (hier nicht dargestellt).

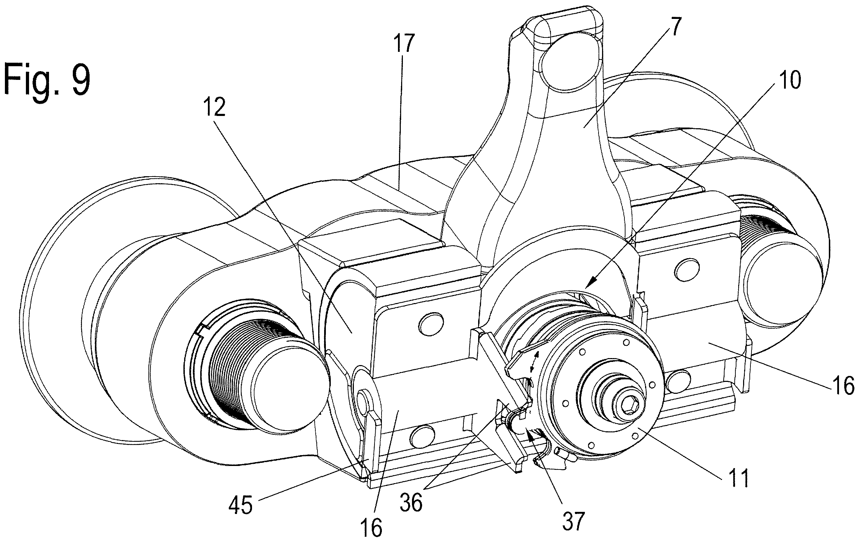

Der ein- oder mehrteilige Bremssattel 3 ist vorzugsweise als ein Schiebesattel ausgebildet, der an einem (hier nicht dargestellten) Bremsträger - beispielsweise an Lagerbolzen - verschiebbar geführt ist. Der Bremssattel 3 umgreift - beispielsweise nach Art des Standes der Technik der Fig. 9 - rahmenartig einen Randabschnitt einer Bremsscheibe 4. Beidseits der Bremsscheibe 4 sind Bremsbeläge 5, 6 angeordnet. Bei Bremsungen wird mit der Zuspannvorrichtung 1 der zuspannseitige Bremsbelag 5 direkt gegen die Bremsscheibe 4 gepresst, wohingegen der reaktionsseitige Bremsbelag 6 mit dem verschieblichen Bremssattel 3 gegen die Bremsscheibe 4 gezogen wird.

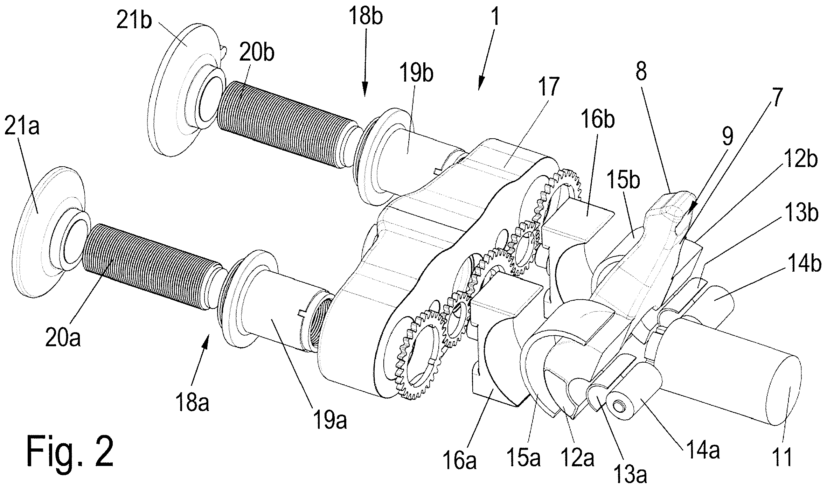

Zur Realisierung einer Exzenterbetätigung weist die Zuspannvorrichtung 1 (siehe jetzt die beispielhafte bevorzugte Ausführung der Fig. 1 und 2) einen schwenkbaren Drehhebel 7 auf, der an seinem einen Ende 8 eine Ausnehmung 9 für den Eingriff der Kolbenstange aufweist. An seinem anderen Ende weist er hier mittig eine Ausnehmung 10 zum Übergreifen einer im Wesentlichen zylindrisch ausgestalteten Baueinheit auf, die eine Nachstellvorrichtung 11 ausbildet.

Der Drehhebel 7 weist ferner hier beidseits der Ausnehmung 10 für die Nachstellvorrichtung 11 zwei Exzenteransätze 12a, b auf, die sich jeweils über ein Schwenklager 13a, b an jeweils einem Stützstift 14a, b abstützen, welche an der Innenseite des Bremssattels 3 abgestützt sind. An der von den Stützstiften 14a, b abgewandten Seiten ist der Drehhebel 7 an seinen Exzenterabschnitten 12a, b über jeweils ein weiteres Schwenklager 15a, b an jeweils einem vorzugsweise einstückigen Lagerbock(element) 16a, b abgestützt, die wiederum an einer Traverse 17 (die quer zur Bremsscheibe ausgerichtet ist) abgestützt sind, die von einem oder hier zwei Zuspannstempeln 18a, b durchsetzt ist, so dass die Traverse hier zwischen diesen zwei Zuspannstempeln 18a, b auch eine Brücke bildet. Die Schwenklager 13, 15 können als Gleit- oder Wälzlager ausgebildet sein.

Die Zuspannstempel weisen hier jeweils eine Gewindehülse 19a, b, einen Gewindestempel 20a, b und jeweils wenigstens ein an den Gewindestempeln 19a, b angeordnetes Druckstück 21a, b auf (Fig. 1, 2). Diese Anordnung ist bevorzugt, da die zwei Zuspannstempel 18a, b eine gleichmäßige Kraftverteilung beim Zuspannen und einen weitestgehend gleichmäßigen Verschleiß insbesondere des zuspannseitigen Bremsbelages 5 sicherstellen. Die Erfindung ist aber nicht auf diese Variante beschränkt.

An ihrer zur Bremsscheibe 4 gewandten Seite ist die Öffnung 2 von einer Verschlußplatte 22 verschlossen, die Öffnungen 23a, b aufweist, welche von den Gewindestempeln 20a, b durchsetzt ist, wobei die Spalte zwischen den Gewindestempeln 20a, b und der Verschlußplatte 22 von Dichtungsanordnungen 24a, b abgedichtet sind (Fig. 1).

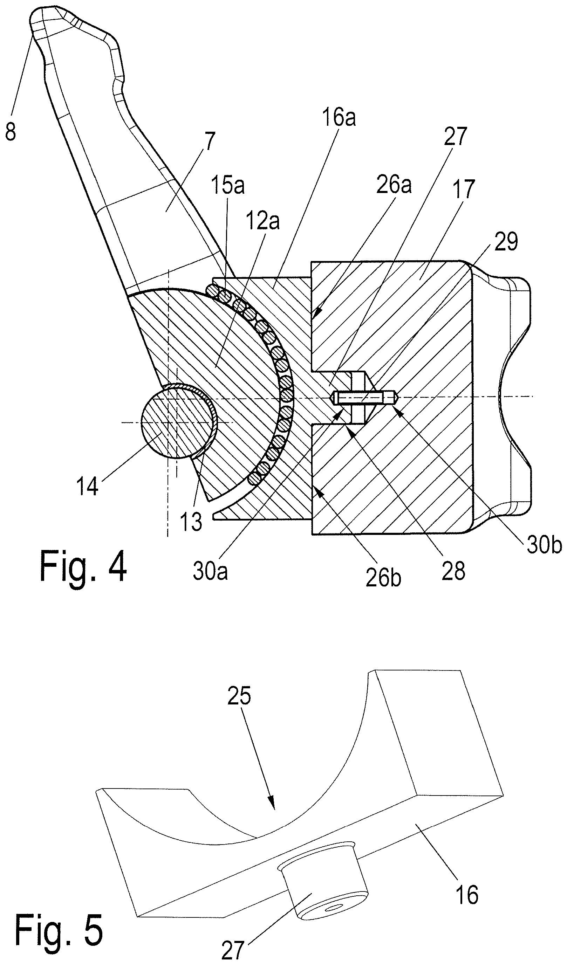

Fig. 4 veranschaulicht, dass die Lagerböcke 16a, b jeweils an ihren zu den Exzenterabschnitten 12a, b des Drehhebels 7 gewandten Seiten eine hier teilzylindrische Ausnehmung 25 aufweisen, in welche jeweils eines der Schwenklager (hier) 15a und einer der Exzenteransätze (hier) 12a eingreift.

An ihrer zur Traverse 17 gewandten Seite stützen sich die Lagerböcke 16a, b jeweils in einem oder mehreren Kontaktbereichen 26 an der Traverse 17 ab.

Vorzugsweise greifen die Lagerböcke 16a, b und die Traverse 17 ferner zur Sicherstellung eines korrekten Sitzes an der Traverse 17 formschlüssig ineinander.

Hier ist vorteilhaft und konstruktiv einfach vorgesehen, dass die Lagerböcke 16a, b mit jeweils wenigstens einem Zentrieransatz 27 in eine korrespondierende Ausnehmung 28 in der Traverse 17 eingreifen, wobei noch ein Zentrierstift 29 in Sacklöcher 30 in dem Zentrieransatz 27 und im Grund der Ausnehmung 28 eingreifen kann, welcher jeweils den Sitz des Lagerbockes 16 an der Traverse 17 weiter optimiert. Dies ist besonders gut in Fig. 4 zu erkennen.

Diese vorteilhafte Ausgestaltung von Drehhebel 7, Lager 15 und wenigstens einem Lagerbockelement 16 ist bei Zuspannvorrichtungen verschiedener Art realisierbar.

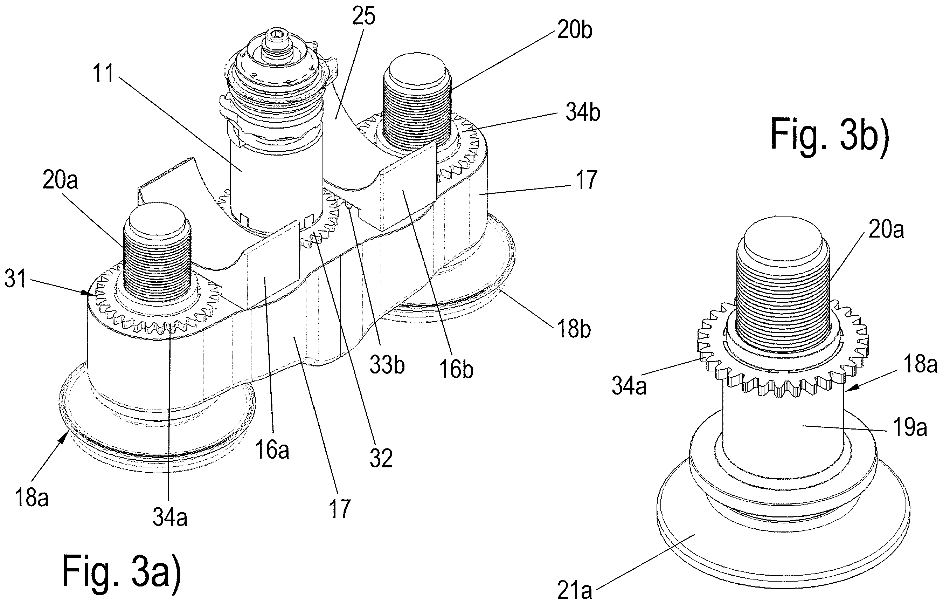

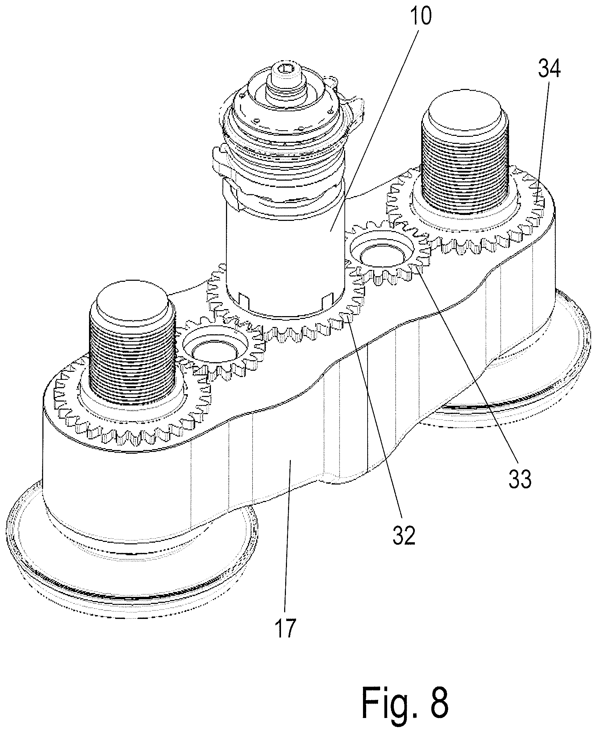

Nach der Ausgestaltung der Fig. 3 sowie 6 bis 8 wird sie von einer besonders vorteilhaften Getriebeanordnung 31 zum synchronen Antrieb der Druckstempel 19 ergänzt.

Diese Getriebeanordnung 31 weist hier (Fig. 3, 6, 7, 8) eine Anordnung von miteinander kämmenden, in einer Ebene liegenden Zahnrädern 32, 33a, b, 34 a, b auf, die an der zum Drehhebel 12 weisenden Seite der Traverse 17 zwischen der Traverse 17 und dem Drehhebel 12 angeordnet sind.

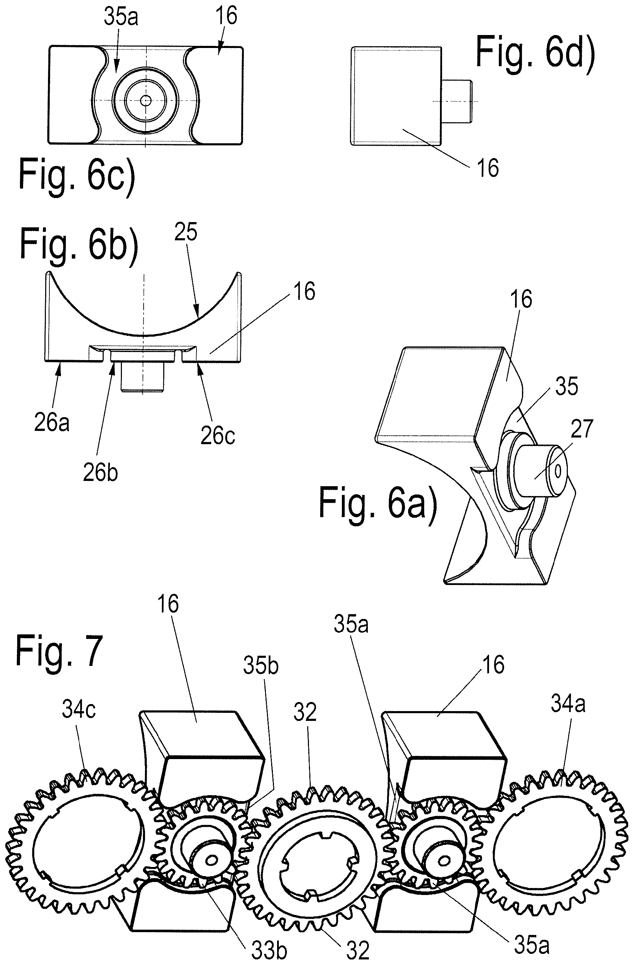

Nach Fig. 7 ist vorgesehen, dass die Lagerböcke 16a, b diese Zahnräder 32 -34 teilweise übergreifen, so dass die Zahnräder unmittelbar an der Traverse 17 angeordnet sein können.

Einzelne der Zahnräder 32 - 34 greifen jeweils in eine Aussparung 35a, b an den von den Lagerböcken 16a, b gewandten Seiten der Lagerböcke 16a, b ein, so dass die Lageböcke nur seitlich der Zahnräder 33 an der Traverse 17 abgestützt sind.

Derart wird das Synchronisationsgetriebe 31 besonders geschützt zentral in der Zuspannvorrichtung 1 angeordnet, was auch den Vorteil mit sich bringt, dass die Zuspannstempel 18 axial relativ kurz gestaltet werden können.

Das mittlere Zahnrad 32 ist hier das Abtriebszahnrad der Nachstellvorrichtung 10, welches Nachstelldrehbewegungen der Nachstellvorrichtung 10 über die mittleren Zahnräder 33a, b die von den Lagerböcken 16,a,b übergriffen werden, auf Antriebszahnräder 34a, b übertragen, die drehfest auf die Gewindehülsen 19 der Druckstempel 18 aufgesetzt sind. Die Zahnräder 33 sind hier auf den Zentrieransätzen 27drehbar gelagert.

Bei Drehungen des Antriebszahnrades 32 werden die beiden Gewindehülsen 19 gedreht, so dass die (z.B. an den Bremsbelägen) drehfest gehaltenen Gewindestempel 20 axial bewegt werden, um Belagverschleiß auszugleichen.

Die Getriebeanordnung 31 zur Synchronisation und/oder zum Antrieb der wenigstens einen Gewindehülse 19a, b oder des wenigstens einen Gewindestempels 20a, b ist derart besonders sicher geschützt sowie platzsparend in die Zuspannvorrichtung 1 integriert.

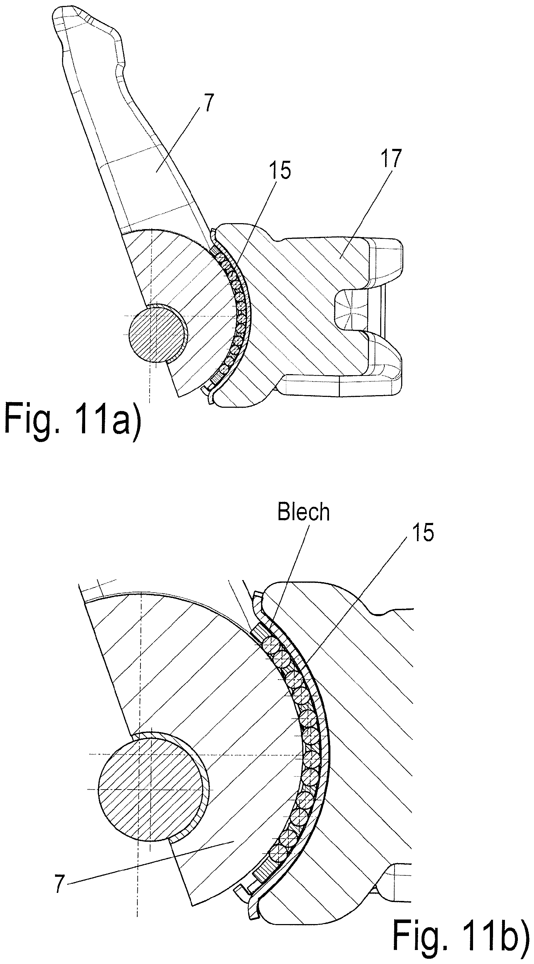

Ein besonderer Vorteil der eine separate Erfindung darstellenden, die Getriebeanordnung 31 aber auch sehr sinnvoll und vorteilhaft ergänzenden Lagerböcke 16a, b zum Abstützen des Drehhebels 7 nebst seines Schwenklagers 15 an der Traverse 17 - beispielsweise im Vergleich zu einem Abstützen über ein gehärtetes Lagerblech in der Traverse (siehe den Stand der Technik der Fig. 11)- liegt darin, liegt darin, dass die Herstellung der Traverse 17 durch die Lagerböcke deutlich vereinfacht werden kann. So muss sie in dem dargestellten Ausführungsbeispiel lediglich eine ebene Anlagefläche für die Kontaktbereiche 26 und einige Bohrungen (28, 30) aufweisen, um die Zentrier- und Lageransätze 27 der Lagerböcke 16 aufzunehmen. Die Auflageflächen 26a, b, c an den Lagerböcken 16 sind in Fig. 6 besonders gut zu erkennen.

Der Zentrieransatz 27 weist vorzugsweise Bereiche verschiedenen Durchmessers auf, von denen einer als Achse für das Zahnrad 33 dient, wobei eine Axialfläche als eine der Kontaktflächen 26b der Lagerböcke 16a, b an der Traverse 17 dient.

Ein besonderer Vorteil der Lagerböcke 16 besteht ferner darin, dass sie es möglich machen, unterschiedliche Materialien oder jedenfalls unterschiedlich bearbeitete Materialien (Guss, spannende Bearbeitung, Schieden usw.) für die Lagerböcke 16 und die eigentliche "reduzierte" Traverse 17 zu verwenden, so dass sie jeweils an ihre Aufgabe optimal angepasst werden können.

Die Lagerböcke 16 sind dabei in angepasster Ausgestaltung auch bei Bremsen einsetzbar, an welche sich der Drehhebel über eine Stützwalze oder Stützstifte nicht am Bremssattel sondern an der Traverse abstützt, wobei dann die größeren Exzenteransätze am Inneren des Bremssattels abgestützt sind (hier nicht dargestellt).

Der Vollständigkeit halber zu erwähnen ist, dass die Gewindehülsen 19a, b hier an ihrem von den Druckstücken abgewandten Enden je drehfest mit einem Blechtopf 42 verbunden sind, der sie vorzugsweise zentriert und an der Traverse 17 hält. An den Blechtöpfen sind an abgedichtet verschließbaren Sattelöffnungen 45 vorzugsweise über Drehmomentübertragungselemente 43 in verschiedener Weise vorteilhaft weitere Funktionen wie ein Rückdrehen an einem bei einem zu großen Drehmoment abscherbaren Rückstelladapter 44 oder eine Sensierung der Nachstelldrehungen oder dgl. realisierbar.

Nachfolgend sei die vorteilhafte Kopplung zwischen der Nachstellvorrichtung 11 und den Zuspannstempeln 20näher betrachtet.

Die Nachstellvorrichtung 10 dient dazu, bei Bremsungen den Verschleiß der Bremsscheibe 4 und der Bremsbeläge 5, 6 auszugleichen, indem die Länge der Zuspannstempel vergrößert wird.

Hierzu wird bei Bremsungen über eine Antriebsgetriebeverbindung - hier eine Antriebsgabel aus Antriebsfingern 36 am Drehhebel 7 (siehe Fig. 9, 10, 11), in die eine Antriebsgabel 37 der Nachstellvorrichtung 10 zahnähnlich eingreift - über Getriebeelemente der Nachstellvorrichtung 10 (die typischerweise einen Freilauf und eine Einwegdrehkupplung umfassen) im Falle eines zu großen Lüftspiels ggf. eine Nachstelldrehbewegung des Antriebsrades 32 zugelassen bzw. erzeugt, welche über die Zahnräder 33a,b; 34a,b hier die Gewindehülsen 19a, b antreibt (wobei es auch denkbar wäre, derart die Gewindespindeln 20a, b anzutreiben, wenn die Gewindespindeln 20 beispielsweise direkt in Innengewinde der Traverse 17 eingreifen würden; hier nicht dargestellt).

Werden die in der Traverse 17 axial ortsfest angeordneten aber drehbaren Gewindehülsen 19a, b verdreht, verlängert sich die Gesamtlänge der Zuspannstempel 18a, b, da die Gewindestempel 19 unverdrehbar aber axial beweglich gehalten sind (z.B. an den Bremsbelägen).

Nach einem besonders vorteilhaften Aspekt der Erfindung ist das Antriebs- und/oder Synchronisationsgetriebe zwischen dem Drehhebel 7 und der Traverse 17 angeordnet.

Eine solche Anordnung ist zwar prinzipiell auch aus der eingangs erwähnten WO 91/19115 bekannt. Allerdings ist das Synchronisationsgetriebe dort als Umschlingungsgetriebe mit einem Zahnriemen ausgebildet, so dass es nicht so kompakt und geschützt, wie die Zahnradanordnung der Fig. 7 zwischen der Traverse 17 und dem Drehhebel unterbringbar ist. Alternativen zur Zahnradanordnung könnten Kegelrad- oder Kronenradgetriebe sein, die zwischen dem Drehhebel 12 und der Traverse 17 angeordnet würden.

Nachfolgend sei die vorteilhafte Kopplung zwischen dem Drehhebel 7 und der Nachstellvorrichtung 11 näher betrachtet.

Nach der WO 91/19115 A wird der Drehhebel zur Ausbildung des Antriebsstiftes zum Antrieb der Antriebsgabel an der Nachstellvorrichtung im Schmiedeprozess an dem Drehhebel ausgebildet. Dies erfordert einen hohen Präzisionsaufwand, denn die Geometrie des Antriebsstiftes beeinflusst stark das Nachstellverhalten. Zusätzlich wird nach dem Stand der Technik an dem Drehhebel auch ein Blechteil angebracht, welches die Funktionen einer Käfigrückführung für ein Nadellager und die Positionierung des Zylinderstiftes übernimmt.

Nach einem weiteren erfinderischen Aspekt wird der Herstellprozess des Drehhebels dadurch deutlich vereinfacht und es wird die Präzision des Antriebselementes dadurch optimierbar, dass an dem Drehhebel ein Bauteil, insbesondere ein Antriebsblech 39 ausgebildet wird, welches die Funktion des Antriebselementes zum Koppeln des Drehhebels 7 mit der Nachstellvorrichtung 11 übernimmt.

Beispielsweise können durch Stanzen und Biegen oder andere Umformprozesse einer, zwei oder mehr der Antriebsfinger 36 an dem Antriebsblech 39 ausgebildet werden, welche in eine Antriebsgabel 37 der Nachstellvorrichtung 11 eingreifen.

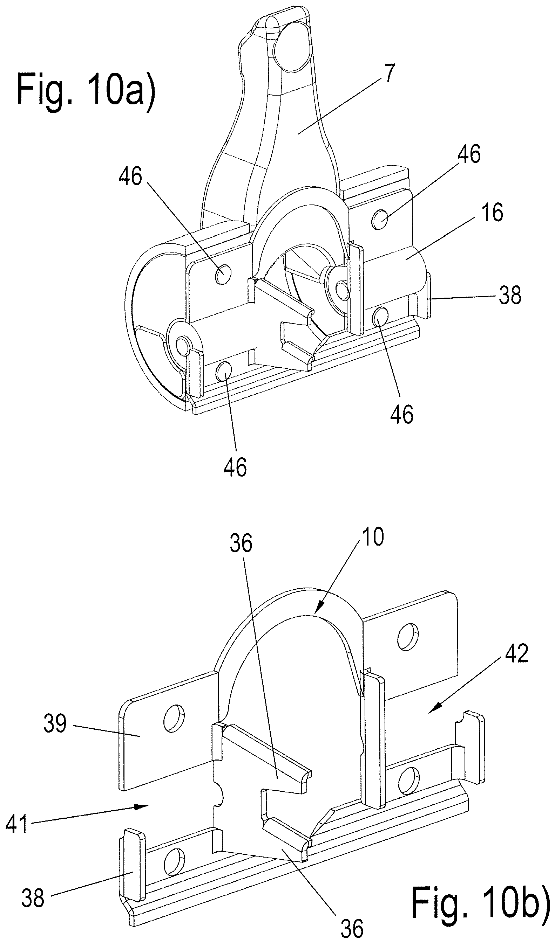

Bei dem Antriebsblech 39 handelt es sich um ein zusätzliches Blech, das lediglich diese Antriebsfunktion realisiert oder aber der eine oder die mehreren Antriebsfinger 36 bzw. allgemeiner die Funktion des Antriebs des Nachstellers 11 werden in ein bestehendes Blech wie das weiter oben erläuterte Blech zur Käfigrückführung integriert. Eine derartige Ausgestaltung zeigt Fig. 10.
Der oder die Antriebsfinger 36 können auch eine Art Zahnsegment ausbilden, eine Art Gabel, eine Art Kronenrad oder aber eine Art Kegelrad.
Nach Fig. 10 deckt ein einziges - hier allein durch Stanzen und umformendes Biegen hergestelltes - Antriebsblech 39 nahezu die gesamte zum Bremssattel gewandte, hier weitgehend ebene Seite des Drehhebels 12 bis auf die Ausnehmungen 10, 40, 41 für die Nachstellvorrichtung 10 und die Stützstifte 14a, b ab. Laschen 38 an dem Blech können für die Käfigrückführung oder dgl. genutzt werden.
Vorzugsweise wird das Antriebsblech 39 mit wenigstens einem Befestigungsmittel an dem Drehhebel 7 angebracht. Hier werden als diese Befestigungsmittel beispielhafte Niete 46 genutzt, die Bohrungen des Antriebsblechs 39 durchsetzen und in Bohrungen des Drehhebels 7 eingreifen und das Antriebsblech 39 derart an dem Drehhebel festlegen. Anstelle von Nieten können auch Schrauben, eine Schweißverbindung oder andere Befestigungsmittel vorgesehen sein.
Ein besonderer Vorteil des separaten Antriebsbleches 39 besteht auch darin, dass die Antriebskontur, beispielsweise die Antriebsfinger 36, präziser herstellbar sind als die direkt an dem Drehhebel 7 ausgebildeten Antriebsstifte nach dem Stand der Technik, was die Präzision der Nachstellung erhöht und auch die Möglichkeit dazu bietet, kompliziertere Antriebsgeometrien zu realisieren, welche reibungsoptimiert sind, was die Präzision der Nachstellung weiter erhöht.
Zu erwähnen ist noch, dass eine Rückstellfeder 47 zwischen der Platte 22 und der Traverse 17 zum Zurückschieben der Traverse 17 nach einer Bremsung dient.

**Bezugszeichen**

| | |
|---|---|
| Zuspannvorrichtung | 1 |
| Öffnung | 2 |
| Bremssattel | 3 |
| Bremsscheibe | 4 |
| Bremsbeläge | 5, 6 |
| Drehhebel | 7 |
| Ende | 8 |
| Ausnehmung | 9 |
| Ausnehmung | 10 |
| Nachstellvorrichtung | 11 |
| Exzenteransätze | 12a, b |
| Schwenklager | 13a, b |
| Stützstifte | 14a, b |
| Schwenklager | 15a, b |
| Lagerböcke | 16a, b |
| Traverse | 17 |
| Zuspannstempel | 18a, b |
| Gewindehülsen | 19a, b |
| Gewindestempel | 20a, b |
| Druckstücke | 21a, b |
| Verschlußplatte | 22 |
| Öffnungen | 23a, b |
| Dichtungsanordnungen | 24a, b |
| Ausnehmung | 25 |
| Kontaktbereiche | 26a, b, c |
| Zentrieransatz | 27 |
| Ausnehmung | 28 |
| Zentrierstift | 29 |
| Sacklöcher | 30a, b |
| Getriebeanordnung | 31 |
| Zahnräder | 32, 33a, b, 34 a, b |
| Aussparung | 35a, b |
| Antriebsfinger | 36 |
| Antriebsgabel | 37 |
| Laschen | 38 |
| Antriebsblech | 39 |
| Ausnehmungen | 40, 41 |
| Blechtopf | 42 |
| Drehmomentübertragungselemente | 43 |
| Rückstelladapter | 44 |
| Sattelöffnungen | 45 |
| Niete | 46 |
| Rückstellfeder | 47 |

## Patentansprüche

1. Zuspannvorrichtung für eine drehhebelbetätigte Scheibenbremse, die zumindest folgendes aufweist:
a) einen Drehhebel (7) mit einem oder mehreren Exzenterabschnitten (12a, b), an welchem ein Antriebselement zum Antrieb einer Nachstellvorrichtung (11) ausgebildet ist, wobei
b) das Antriebselement an einem separat zu dem Drehhebel (7) ausgebildeten Bauelement ausgebildet ist, dass an dem Drehhebel (7) angeordnet, insbesondere befestigt, ist,
**dadurch gekennzeichnet, dass**
c) das Bauelement als ein Antriebsblech (39) ausgebildet ist, an welchem das wenigstens eine Antriebselement ausgebildet ist, und dass
d) an dem Antriebsblech (39) wenigstens eine weitere Funktionskontur wie eine Lasche (38) zur Rückholung eines Käfigs eines Schwenklagers (13a, 13b; 15a, 15b) des Drehhebels (7) ausgebildet ist.

2. Zuspannvorrichtung nach Anspruch 1, **dadurch gekennzeichnet, dass** das wenigstens eine Antriebselement als wenigstens ein Antriebsfinger (36), eine Antriebsgabel, ein Zahnsegment und/oder ein sonstiges Antriebselement ausgebildet ist.

3. Zuspannvorrichtung nach Anspruch 1, **dadurch gekennzeichnet, dass** das Antriebselement an dem Metallblech durch Stanzen und Biegen ausgebildet worden ist.

4. Zuspannvorrichtung nach Anspruch 3, **dadurch gekennzeichnet, dass** das Antriebsblech (39) mit wenigstens einem Befestigungsmittel an dem Drehhebel (7) angebracht ist.

5. Zuspannvorrichtung nach Anspruch 4, **dadurch gekennzeichnet, dass** das oder die Befestigungsmittel als Niete (46) und/oder Schrauben ausgebildet ist/sind, das/die Bohrungen/Ausstanzungen des Antriebsblechs (39) durchsetzt(en) und in Bohrungen des Drehhebels (7) eingreifen und das Antriebsblech (39) derart an dem Drehhebel (7) festlegen.

6. Zuspannvorrichtung nach Anspruch 4, **dadurch gekennzeichnet, dass** das oder die Befestigungsmittel eine Schweißverbindung aufweisen.

7. Scheibenbremse mit einer Zuspannvorrichtung nach einem oder mehreren der vorstehenden Ansprüche

## Claims

1. Application device for a rotary lever-actuated disc brake comprising at least the following:
a) a rotary lever (7) with one or more eccentric sections (12a, b), on which a drive element for driving an adjusting device (11) is formed, wherein
b) the drive element is formed on a component which is separate from the rotary lever (7) and located on, in particular secured to, the rotary lever (7),
**characterised in that**
c) the component is designed as a drive plate (39), on which the at least one drive element is formed, and **in that**
d) at least one further functional contour, such as a lug (38) for returning a cage of a pivot bearing (3a, 13b; 15a, 15b) of the rotary lever (7), is formed on the drive plate (39).

2. Application device according to claim 1, **characterised in that** the at least one drive element is designed as at least one drive finger (36), a drive fork, a tooth segment and/or another drive element.

3. Application device according to claim 1, **characterised in that** the drive element has been formed on the sheet metal by stamping and bending.

4. Application device according to claim 3, **characterised in that** the drive plate (39) is mounted on the rotary lever (7) with at least one fastening means.

5. Application device according to claim 4, **characterised in that** the fastening means is/are designed as a rivet/rivets and/or a screw/screws which pass(es) through bores/perforations of the drive plate (39) and engage(s) with bores of the rotary lever (7), thereby locating the drive plate (39) on the rotary lever (7).

6. Application device according to claim 4, **characterised in that** the fastening means comprise(s) a welded joint.

7. Disc brake with an application device according to one or more of the preceding claims.

## Revendications

1. Dispositif de serrage d'un frein à disque actionné par un levier tournant, qui a au moins ce qui suit :
a) un levier (7) tournant, qui a une ou plusieurs parties (12a, b) d'excentrique et sur lequel est constitué un élément d'entraînement pour entraîner un dispositif (11) de rattrapage, dans lequel
b) l'élément d'entraînement est constitué sur un élément constitutif constitué de manière distincte du levier (7) tournant et monté, notamment fixé, sur le levier (7) tournant,
**caractérisé en ce que**
c) l'élément constitutif est constitué sous la forme d'une tôle (39) d'entraînement, sur laquelle est constitué le au moins un élément d'entraînement, et **en ce que**
d) sur la tôle (39) d'entraînement est constitué un autre contour de fonction, comme une languette (38), pour le rappel d'une cage d'un palier (13a, 13b ; 15a, 15b) pivotant du levier (7) tournant.

2. Dispositif de serrage suivant la revendication 1, **caractérisé en ce que** le au moins un élément d'entraînement est constitué sous la forme d'au moins un doigt (36) d'entraînement, d'une fourchette d'entraînement, d'un segment denté et/ou d'un autre élément d'entraînement.

3. Dispositif de serrage suivant la revendication 1, **caractérisé en ce que** l'élément d'entraînement a été constitué en tôle métallique par estampage et pliage.

4. Dispositif de serrage suivant la revendication 3, **caractérisé en ce que** la tôle (39) d'entraînement est mise sur le levier (7) tournant par au moins un moyen de fixation.

5. Dispositif de serrage suivant la revendication 4, **caractérisé en ce que** le ou les moyens de fixation est/sont constitué (s) sous la forme de rivets (46) et/ou de vis, qui passent dans les trous/découpes de la tôle (39) d'entraînement et pénètrent dans des trous du levier (7) tournant et fixent ainsi la tôle (39) d'entraînement au levier (7) tournant.

6. Dispositif de serrage suivant la revendication 4, **caractérisé en ce que** le ou les moyens de fixation ont un joint soudé.

7. Frein à disque ayant un dispositif de serrage suivant l'une ou plusieurs des revendications précédentes.
